# EUROPEAN PATENT APPLICATION

(11) **EP 1 265 387 A1**
(43) Date of publication of application: **11.12.2002**
(21) Application number: 01908325.2
(22) Date of filing: 05.03.2001
(51) Int. Cl.: H04H 1/02, H04H 1/00, H04N 5/76, G06F 17/30, G06F 17/60, G11B 27/00

(54) **PROGRAM RECEIVER AND ACCUMULATION BROADCAST CHARGING DEVICE**

(30) Priority: 03.03.2000 JP 2000059419
(71) Applicant: MATSUSHITA ELECTRIC INDUSTRIAL CO., LTD., Kadoma-shi, Osaka 571-8501 (JP); Dentsu Inc., Chuo-ku, Tokyo 104-8426 (JP)
(72) Inventor: NISHI, Hiroyuki, Suginami-ku, Tokyo 168-0065 (JP); TANIGAWA, Hidekazu, Hirakata-shi, Osaka 573-1105 (JP); AKIYAMA, Ryuhei, Nishinomiya-shi, Hyogo 662-0066 (JP); MAEDA, Hiroki, Toyonaka-shi, Osaka 560-0043 (JP)
(74) Representative: Holmes, Miles
(86) International application number: JP0101703
(87) International publication number: WO01065746

(57) **Abstract**

A program receiving apparatus comprises a receiving section for receiving programs and program attributes indicating attributes of the programs, a program memory section for holding memory regions corresponding to the program attributes and memorizing the programs in the memory regions, and a storage control section for storing the programs received by the receiving section in the memory regions of the program memory section corresponding to the program attributes received by the receiving section.

## Description

### TECHNICAL FIELD

The present invention relates to a program receiving apparatus and a storage broadcast charging apparatus. More particularly, the present invention relates to a program receiving apparatus and a storage broadcast charging apparatus which utilize the contents of a stored program.

### BACKGROUND ART

A receiving apparatus for storing the contents of a broadcasted program stores program contents, as long as a user storage region in a storage device in the receiving apparatus is empty. For example, a receiving apparatus having a video apparatus, such as D-VHS, stores program contents as long as a user storage region is empty.

A known technique in which a user storage region of a storage device is divided into several regions in advance for an information apparatus, such as a personal computer. An example of such an information apparatus is VAIO.

However, the above-described receiving apparatus which stores broadcasted program contents has the following problems.

Firstly, for example, in a receiving apparatus having a video apparatus, program contents are stored by a method of designating recording times so that storage regions are allocated to the program contents in order of time when they are stored from the earliest onwards.

Therefore, when program contents, other than the program contents which a user most preferably wants to store, are stored earlier, so that a storage region becomes insufficient, the program contents which the user most preferably wants to store cannot be stored.

Secondly, in order to receive a storage broadcast service, a predetermined dedicated region is required for a receiving apparatus in addition to the storage device of a receiving apparatus. Therefore, reception of a plurality of storage broadcast services would require a storage device having a very large storage region, leading to an increase in the cost of the receiving apparatus. A user has to bear a considerably high expense for purchase of such a receiving apparatus having an increased cost.

An object of the present invention is to provide a program receiving apparatus capable of ensuring that program contents which a user most preferably wants to store are stored.

Another object of the present invention is to provide a program receiving apparatus and a storage broadcast charging apparatus capable of receiving a storage broadcast service without a user bearing a large expense.

### DISCLOSURE OF THE INVENTION

A program receiving apparatus according to the present invention comprises a receiving section for receiving programs and program attributes indicating attributes of the programs, a program memory section for holding memory regions corresponding to the program attributes and memorizing the programs in the memory regions, and a storage control section for storing the programs received by the receiving section in the memory regions of the program memory section corresponding to the program attribute received by the receiving section. Thereby, the above-described objects are achieved.

The program receiving apparatus may further comprises a memory region detecting section for detecting that the memory regions corresponding to the program attributes are allocated, and an allocation information transmitting section for, when the memory region detecting section detects that a memory region corresponding to a specific program attribute is allocated, transmitting allocation information indicating the allocation.

The program receiving apparatus may further comprises a capacity managing section for managing capacities of the memory regions corresponding to the program attributes, a capacity obtaining section for obtaining the capacities managed by the capacity managing section, and a capacity information transmitting section for transmitting capacity information having a set of the program attributes and the capacities.

The program receiving apparatus may further comprises a memory region setting section for setting the memory region of each of the program attributes in the program memory section.

A storage broadcast charging apparatus according to the present invention comprises a transmitting end information receiving section for receiving transmitting end information having capacity information and a transmitting end identifier for identifying a transmitting end for the capacity information, and a refund calculating section for calculating a fund which should be paid back to the transmitting end identified with the transmitting end identifier contained in the transmitting end information using the capacity information contained in the transmitting end information as a parameter. Thereby, the above-described objects are achieved.

### BRIEF DESCRIPTION OF THE DRAWINGS

Figure **1** is a block diagram for explaining a program receiving apparatus according to an embodiment of the present invention.
Figure **2** is a diagram for explaining program contents and a program attribute according to the embodiment.
Figure **3** is a diagram for explaining a screen for setting a memory region for each program attribute in a program memory section.
Figure **4** is a diagram for explaining a program attribute table according to the embodiment.
Figure **5** is a diagram for explaining another screen for setting a memory region for each program attribute in a program memory section.
Figure **6** is a diagram for explaining another program attribute table according to the embodiment.
Figure **7** is a diagram for explaining another screen for setting a memory region for each program attribute in a program memory section according to the embodiment.
Figure **8** is a diagram for explaining another program attribute table according to the embodiment.
Figure **9** is a flowchart of an operation of a program receiving apparatus according to the embodiment for storing program contents.
Figure **10** is a flowchart of an operation of the program receiving apparatus according to the embodiment for transmitting allocation information.
Figure **11** is a flowchart of an operation of the program receiving apparatus according to the embodiment for transmitting capacity information.
Figure **12** is a block diagram for explaining a storage broadcast charging apparatus according to an embodiment of the present invention.
Figure **13** is a diagram for explaining a refund calculation table according to an embodiment of the present invention.
Figure **14** is a flowchart showing an operation of the storage broadcast charging apparatus according to the embodiment.

### BEST MODE FOR CARRYING OUT THE INVENTION

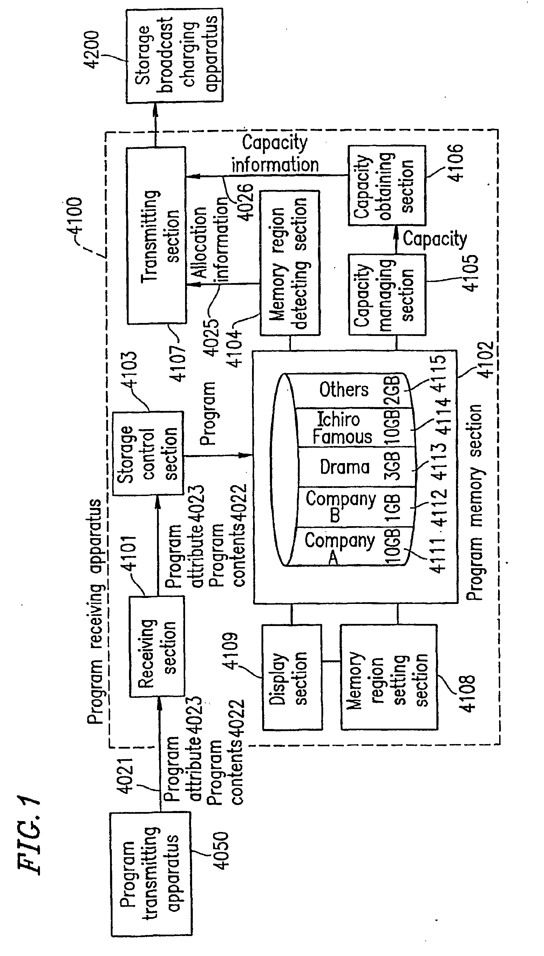

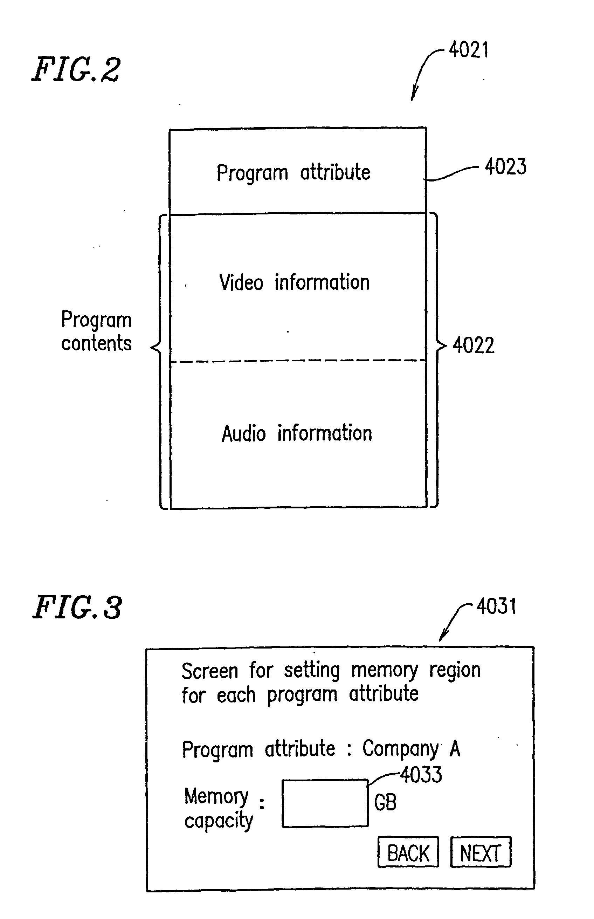

Figure **1** is a block diagram for explaining a program receiving apparatus **4100** according to an embodiment of the present invention. Figure **2** is a diagram for explaining program contents **4022** and a program attribute **4023** according to the embodiment. The program receiving apparatus **4100** comprises a receiving section **4101,** a program memory section **4102,** a storage control section **4103,** a memory region detecting section **4104,** a capacity managing section **4105,** a capacity obtaining section **4106**, a transmitting section **4107**, a memory region setting section **4108**, and a display section **4109**.

The receiving section **4101** receives a program **4021** from a program transmitting apparatus **4050**. As shown in Figure **2**, the program **4021** contains the program contents **4022** and the program attribute **4023**. The program contents **4022** contain video information and audio information. The receiving section **4101** may comprise a tuner and a separation circuit, for example.

The program memory section **4102** holds memory regions **4111, 4112, 4113, 4114** and **4115** corresponding to the program attribute **4023** and memorizing the program **4021** into the memory regions **4111, 4112, 4113, 4114** and **4115.** The program memory section **4102** may be a memory medium, such as a hard disk and a DVD-RAM.

The storage control section **4103** stores the program **4021** received by the receiving section **4101** into a memory region in the program memory section **4102** corresponding to the program attribute **4023** received by the receiving section **4101**. The memory region detecting section **4104** detects that the memory region, corresponding to the program attribute **4023**, has been allocated. The capacity managing section **4105** manages the capacity of the memory region corresponding to the program attribute **4023.** The capacity obtaining section **4106** obtains capacitymanaged by the capacity managing section **4105.**

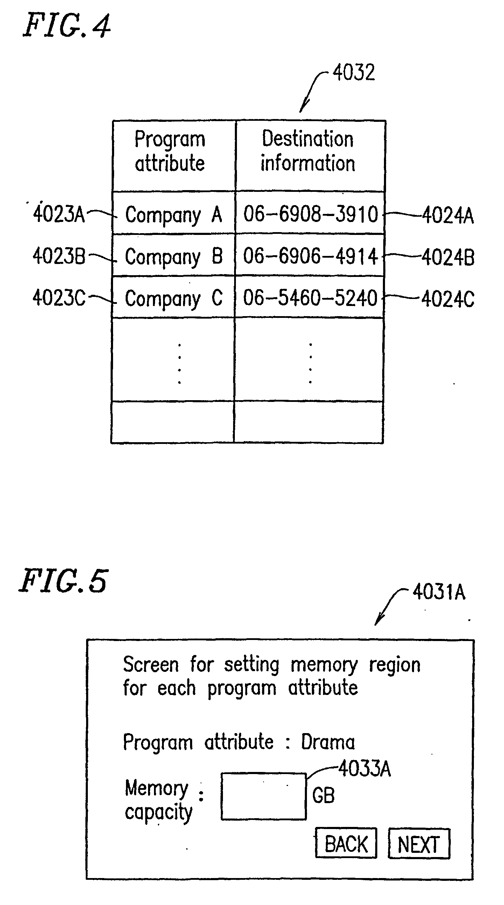

Figure **3** is a diagram for explaining a screen **4031** for setting a memory region for each program attribute **4023** in the program memory section **4102** according to the embodiment. Figure **4** is a diagram for explaining a program attribute table **4032** according to the embodiment.

The memory region setting section **4108** sets a memory region for each program attribute **4023** in the program memory section **4102**. The memory region setting section **4108** has the program attribute table **4032**. The memory region setting section **4108** displays, on the display section **4109**, the screen **4031** for setting a memory region for each program attribute **4023** in the program memory section **4102**, based on the program attribute table **4032**. The screen **4031** may be changed to a screen for inputting the value of memory capacity for other program attributes.

The program attribute table **4032** contains at least one program attribute. In the example shown in Figure **4**, the program attribute table **4032** contains program attributes **4023A, 4023B, 4023C,** ... . The program attribute **4023A** may be company A. The program attribute **4023B** may be company B. The program attribute **4023C** may be company C.

The program attribute table **4032** may contain destination information **4024A, 4024B, 4024C,** ... corresponding to the program attributes **4023A, 4023B, 4023C,** ... . For example, the destination information **4024A** may be a point of contact of company A (e.g., a telephone number). The destination information **4024A** may be a mail address or a fax number.

When a user inputs the value of memory capacity for company A into a memory capacity input region **4033** on the screen **4031**, the memory region setting section **4108** sets the memory region **4111** corresponding to the program attribute **4023A** indicating company A. For example, when the user inputs 10 GB, the memory region setting section **4108** sets the memory region **4111** of 10 GB.

When the screen **4031** is changed to a screen for inputting the value of memory capacity for company B and then a user inputs the value of memory capacity for company B, the memory region setting section **4108** sets the memory region **4112** corresponding to the program attribute **4023B** indicating company B. For example, when the user inputs 1 GB, the memory region setting section **4108** sets the memory region **4112** of 1 GB.

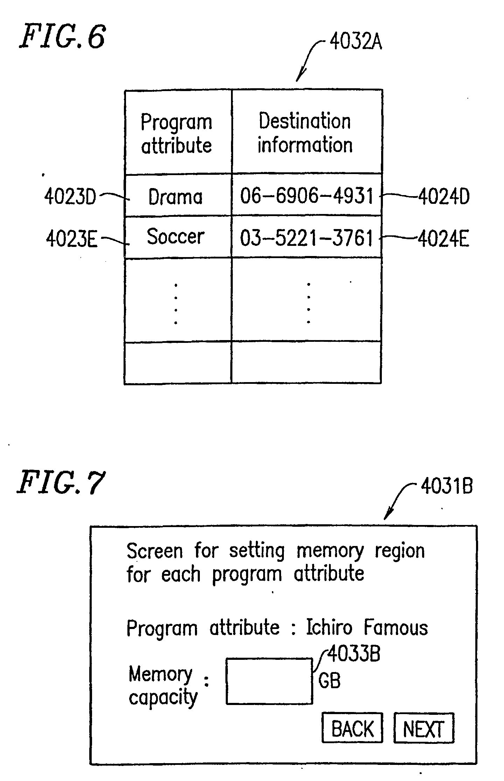

Figure **5** is a diagram for explaining another screen **4031A** for setting a memory region for each program attribute **4023** in the program memory section **4102**. Figure **6** is a diagram for explaining another program attribute table **4032A** according to the embodiment.

The memory region setting section **4108** has the program attribute table **4032A**. In the example shown in Figure **6,** the program attribute table **4032A** contains program attributes **4023D, 4023E,** ... . The program attribute **4023D** may be a drama. The program attribute **4023E** may be soccer. Destination information **4024D** may be a point of contact of a company which produces the drama of the program attribute **4023D** (e.g., a telephone number). The destination information **4024D** may be a mail address or a fax number.

When a user inputs the value of memory capacity for the drama into a memory capacity input region **4033A** on the screen **4031A**, the memory region setting section **4108** sets the memory region **4113** corresponding to the program attribute **4023D** indicating the drama. For example, the user inputs 3 GB, the memory region setting section **4108** sets the memory region **4113** of 3 GB.

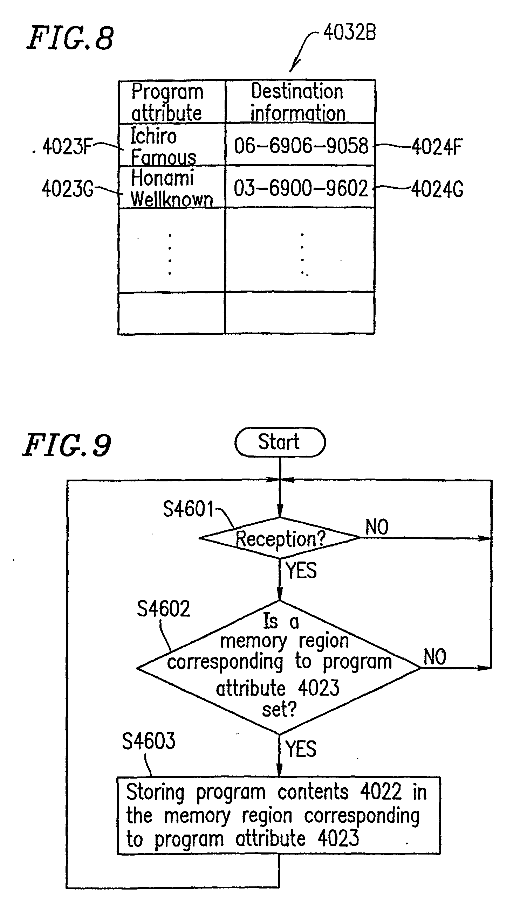

Figure **7** is a diagram for explaining another screen **4031B** for setting a memory region for each program attribute **4023** in the program memory section **4102**. Figure **8** is a diagram for explaining another program attribute table **4032B** according to the embodiment.

The memory region setting section **4108** has the program attribute table **4032B.** In the example shown in Figure **8,** the program attribute table **4032B** contains program attributes **4023F, 4023G,** ... . The program attribute **4023F** may be the name of a first famous person (e.g., Ichiro Famous). The program attribute **4023G** may be the name of a second famous person (e.g., Honami Wellknown). Destination information **4024F** may be a point of contact of an agency, to which the first famous person belongs, of the program attribute **4023F** (e.g., a telephone number). The destination information **4024F** may be a mail address or a fax number.

When a user inputs the value of memory capacity for "Ichiro Famous" into the memory capacity input region **4033A** on the screen **4031B**, the memory region setting section **4108** sets the memory region **4114** corresponding to the program attribute **4023F** indicating "Ichiro Famous". For example, the user inputs 25 GB, the memory region setting section **4108** sets the memory region **4114** of 25 GB.

Thus, the memory region setting section **4108** sets the memory regions **4111**, **4112**, **4113** and **4114** for the respective program attributes **4023** in the program memory section **4102**.

Note that the memory region setting section **4108** may set the memory region **4115** for storing a program having another program attribute. For example, if the memory region **4115** for storing a program having another program attribute is set, a program having a program attribute other than the program attribute **4023A** indicating company A, the program attribute **4023B** indicating company B, the program attribute **4023D** indicating the drama, and the program attribute **4023F** indicating "Ichiro Famous", is stored in the memory region **4115.**

The memory regions **4111**, **4112**, **4113**, **4114**, and **4115** may be prioritized. For example, if the priority of the memory region **4111** is set to be higher than the priority of the memory region **4113**, when the program **4021** containing both the program attribute **4023A** indicating company A and the program attribute **4023D** indicating the drama is received, the program **4021** is stored in the memory region **4111** having priority higher than that of the memory region **4113**.

Further, a multiple attribute memory region corresponding to a plurality of program attributes may be set. For example, when a multiple attribute memory region corresponding to both the program attribute **4023A** indicating company A and the program attribute **4023D** indicating the drama is set, only a program containing both the program attribute **4023A** indicating company A and the program attribute **4023D** indicating the drama is stored in the multiple attribute memory region. If a multiple attribute region corresponding to both the program attribute **4023B** indicating company B and the program attribute **4023G** indicating "Honami Wellknown" which is the name of a famous person is set, only a program containing both the program attribute **4023B** indicating company B and the program attribute **4023G** indicating "Honami Wellknown" is stored in the multiple attribute memory region.

Figure **9** is a flowchart of an operation of the program receiving apparatus **4100** according to the embodiment of the present invention for storing the program contents **4022**.

The receiving section **4101** judges whether or not the program **4021** has been received from the program transmitting apparatus **4050** (S4601). When the receiving section **4101** judges that the program **4021** has been received from the program transmitting apparatus **4050**, the storage control section **4103** judges whether or not a memory region corresponding to the program attribute **4023** contained in the program **4021** has been set in the program memory section **4102** (S4602).

When the storage control section **4103** judges that a memory region corresponding to the program attribute **4023** contained in the program **4021** has been set in the program memory section **4102,** the storage control section **4103** stores the program contents **4022** contained in the program **4021** in the memory region corresponding to the program attribute **4023** (S4603).

For example, in the example shown in Figure 1, when the program attribute **4023** indicates company A, the memory region **4111** indicating company A has been set in the program memory section **4102**. Therefore, the storage control section **4103** stores the program contents **4022** in the memory region **4111** corresponding to the program attribute **4023** indicating company A.

When the receiving section **4101** judges that the program **4021** has not been received from the program transmitting apparatus **4050** (NO in S4601), the storage control section **4103** judges that a memory region corresponding to the program attribute **4023** has not been set in the program memory section **4102** (NO in S4602), or the storage control section **4103** stores the program contents **4022** in a memory region corresponding to the program attribute **4023** (S4603), the process returns to S4601.

As described above, according to this embodiment, the memory regions **4111, 4112, 4113** and **4114** corresponding to program attributes which a user wants to store are set in the program memory section **4102** in advance, only the program contents **4022** having the program attributes which the user wants to store are stored in the program memory section **4102**. Therefore, the program contents **4022** which the user wants to store can be reliably stored.

Note that the memory regions may be prioritized.

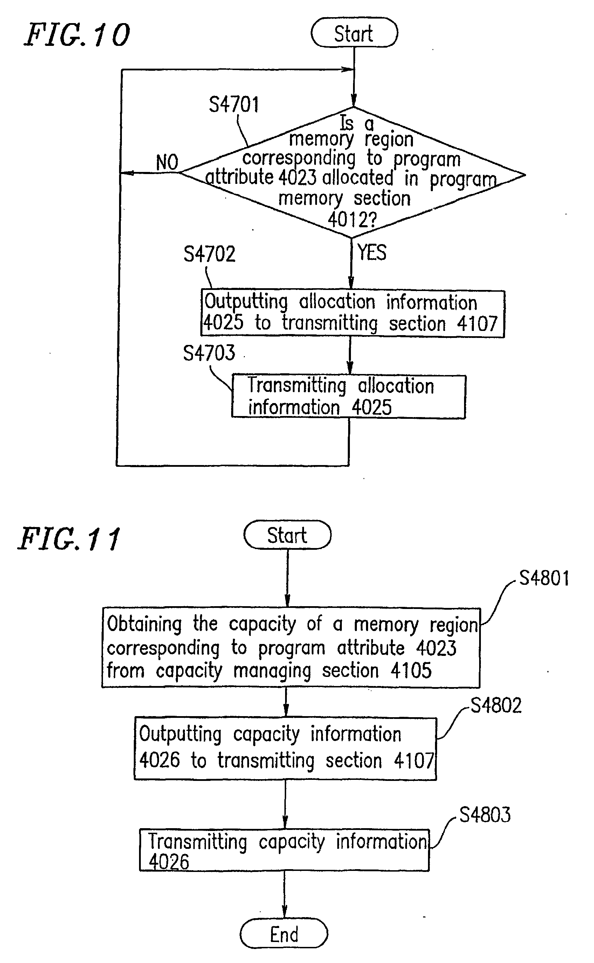

Figure **10** is a flowchart of an operation of the program receiving apparatus **4100** according to the embodiment for transmitting allocation information.

The memory region detecting section **4104** judges whether or not a memory region corresponding to the program attribute **4023** has been allocated in the program memory section **4102** (S4701). When detecting that a memory region corresponding to the program attribute **4023** has been allocated in the program memory section **4102**, the memory region detecting section **4104** outputs allocation information **4025** indicating that the memory region corresponding to the program attribute **4023** has been allocated in the program memory section **4102**, to the transmitting section **4107** (S4702).

For example, when detecting that the memory region **4111** corresponding to the program attribute **4023A** indicating company A has been allocated in the program memory section **4102**, the memory region detecting section **4104** outputs allocation information **4025A** indicating that the memory region **4111** corresponding to the program attribute **4023A** indicating company A has been allocated in the program memory section **4102,** to the transmitting section **4107.** The allocation information **4025A** contains information indicating company A.

When receiving the allocation information **4025** from the memory region detecting section **4104**, the transmitting section **4107** transmits the allocation information **4025** to a storage broadcast charging apparatus **4200** (S4703). The transmitting section **4107** may store the allocation information received from the memory region detecting section **4104** in a buffer (not shown) and transmit the stored allocation information at predetermined timing (e.g., periodically).

When the memory region detecting section **4104** does not detect that a memory region corresponding to the program attribute **4023** has been allocated in the program memory section **4102** (NO in S4701), or when the transmitting section **4107** transmits the allocation information **4025** to the storage broadcast charging apparatus **4200** (S4703), the process returns to S4701.

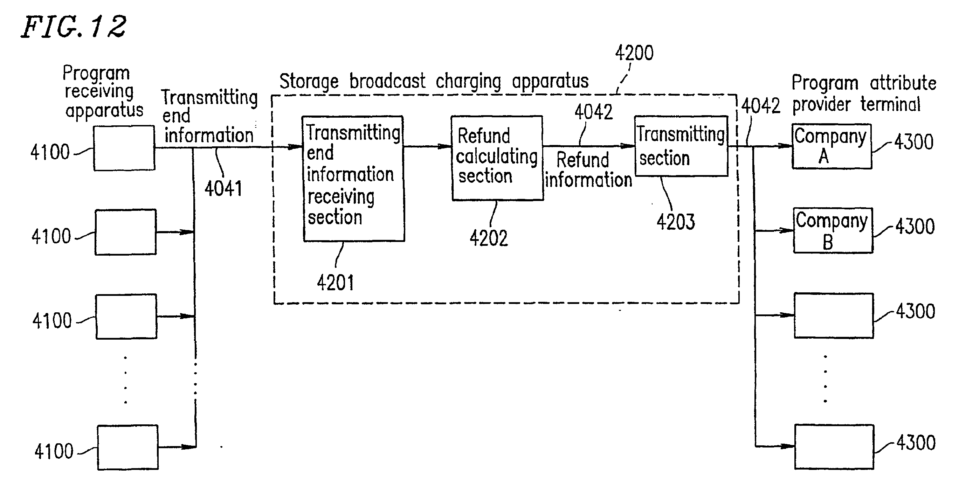

Figure **11** is a flowchart of an operation of the program receiving apparatus **4100** of the embodiment transmitting capacity information. The capacity managing section **4105** manages the capacities of the memory regions **4111, 4112, 4113** and **4114** corresponding to the respective program attributes **4023,** which are set by the memory region setting section **4108**.

For example, in the example shown in Figure **1**, the capacity managing section **4105** manages the capacity (10 GB) of the memory region **4111** corresponding to the program attribute **4023A,** the capacity (1 GB) of the memory region **4112** corresponding to the program attribute **4023B,** the capacity (3 GB) of the memory region **4113** corresponding to the program attribute **4023D**, and the capacity (25 GB) of the memory region **4114** corresponding to the program attribute **4023F**.

The capacity obtaining section **4106** obtains the program attributes **4023** and the capacities of the memory regions **4111**, **4112**, **4113** and **4114** corresponding to the respective program attributes **4023** from the capacity managing section **4105** (S4801). The capacity obtaining section **4106** outputs capacity information **4026** having a set of the program attributes **4023** and the capacities to the transmitting section **4107** (S4802).

For example, in the example shown in Figure **1**, the capacity information **4026** contains a set of the program attribute **4023A** indicating company A and the capacity of 10 GB, a set of the program attribute **4023B** indicating company B and the capacity of 1 GB, a set of the program attribute **4023D** indicating the drama and the capacity of 3 GB, and a set of the program attribute **4023F** indicating "Ichiro Famous" and the capacity of 25 GB. The transmitting section **4107** transmits the capacity information **4026** to the storage broadcast charging apparatus **4200** described below (S4803).

Figure **12** is a block diagram for explaining the storage broadcast charging apparatus **4200** of the embodiment. The storage broadcast charging apparatus **4200** comprises a transmitting end information receiving section **4201**, a refund calculating section **4202**, and a transmitting section **4203**.

The transmitting end information receiving section **4201** receives transmitting end information **4041** from the program receiving apparatus **4100**. The transmitting end information **4041** has the program attribute **4023**, the capacity information **4026**, and transmitting end identifiers for identifying transmitting ends of the capacity information **4026** (Figure 1). The transmitting end identifier may be, for example, a point of contact of a user of the program receiving apparatus **4100** (e.g., a telephone number). The transmitting end identifier may be a mail address or a fax number.

The refund calculating section **4202** calculates a refund, which should be paid back to a transmitting end identified by the identifier possessed by the transmitting end information **4041,** based on the capacity information **4026** (Figure **1**) as a parameter.

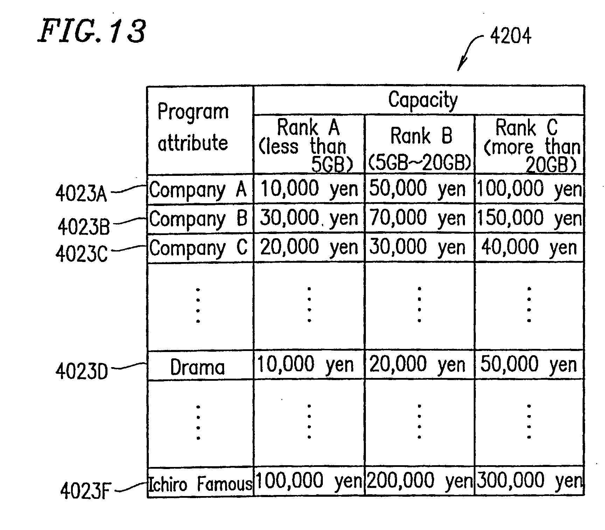

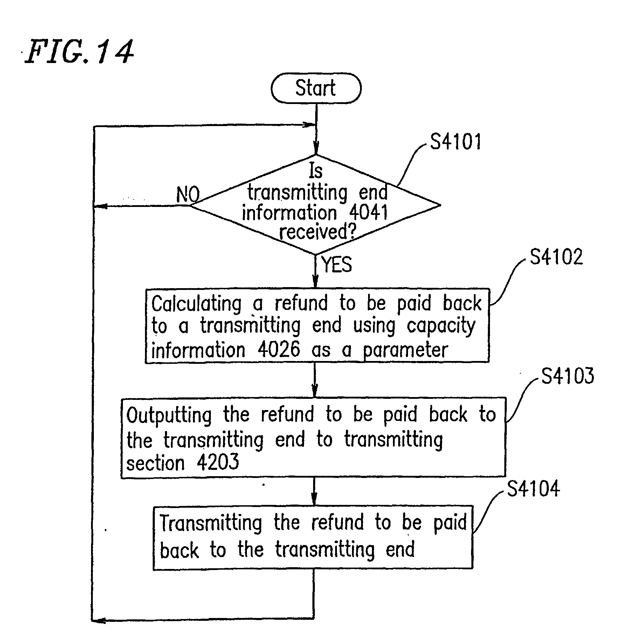

Figure **13** is a diagram for explaining a refund calculation table **4204** according to the embodiment. Figure **14** is a flowchart of an operation of the storage broadcast charging apparatus **4200** of the embodiment.

The transmitting end information receiving section **4201** judges whether or not the transmitting end information **4041** has been received from the program receiving apparatus **4100** (S4101). When the transmitting end information receiving section **4201** judges that the transmitting end information **4041** has been received from the program receiving apparatus **4100,** the refund calculating section **4202** calculates a fund, which should be paid back to a transmitting end, based on the program attribute **4023,** the capacity information **4026** and the refund calculation table **4204** (S4102).

For example, when the program attribute **4023** is the program attribute **4023A** indicating company A and the capacity information **4026** indicates 10 GB, the refund calculation table **4204** shows that company A corresponds to rank B and the refund calculating section **4202** calculates a refund to 50,000 yen.

For example, when the program attribute **4023** is the program attribute **4023D** indicating the drama and the capacity information **4026** indicates 3 GB, the refund calculation table **4204** shows that the drama corresponds to rank A and the refund calculating section **4202** calculates a refund to 10,000 yen.

For example, when the program attribute **4023** is the program attribute **4023F** indicating "Ichiro Famous" and the capacity information **4026** indicates 25 GB, the refund calculation table **420**4 shows that "Ichiro Famous" corresponds to rank C and the refund calculating section **4202** calculates a refund to 300,000 yen.

Thus, the refund calculating section **4202** calculates a fund, which should be paid back to a transmitting end identified by the identifier contained by the transmitting end information **4041**, based on the capacity information **4026** contained in the transmitting end information **4041**. Note that although in the example a refund is calculated using the capacity information **4026** as a parameter, the present invention is not limited to this. For example, a refund may be calculated using the allocation information **4025** as a parameter.

The refund calculating section **4202** outputs refund information **4042** to the transmitting section **4203** (S4103). The refund information **4042** contains the program attribute **4023** and a calculated refund. The transmitting section **4203** transmits the refund information **4042** to program attribute provider terminals **4300** corresponding to the program attribute **4023** (S4104).

For example, when the program attribute **4023** is the program attribute **4023A** indicating company A, the transmitting section **4203** transmits the refund information **4042** to the program attribute provider terminal **4300** of company A. When the program attribute **4023** is the program attribute **4023B** indicating company B, the transmitting section **4203** transmits the refund information **4042** to the program attribute provider terminal **4300** of company B. When the program attribute **4023** is the program attribute **4023D** indicating the drama, the transmitting section **4203** transmits the refund information **4042** to the program attribute provider terminal **4300** of a company which produces the drama. When the program attribute **4023** is the program attribute **4023F** indicating the name of the first famous person "Ichiro Famous", the transmitting section **4203** transmits the refund information **4042** to the program attribute provider terminal **4300** of an agency, to which "Ichiro Famous" belongs.

Thus, according to the embodiment, the storage broadcast charging apparatus **4200** transmits the refund information **4042** which is calculated using the capacity information **4026** contained in the transmitting end information **4041** as a parameter, to the program attribute provider terminal **4300** possessed by a service provider.

Therefore, a charge for use of the program memory section **4102** can be paid back from a service (program attribute) provider based on the number of services (program attribute) which are assigned to the program memory section **4102** in the program receiving apparatus **4100.**

As a result, the program receiving apparatus **4100** and the storage broadcast charging apparatus **4200** capable of receiving storage broadcast services, without a user bearing a large expense, can be provided.

### INDUSTRIAL APPLICABILITY

As described above, according to the present invention, a program receiving apparatus capable of reliably storing program contents which a user wants to store can be provided.

Further, according to the present invention, a program receiving apparatus and a storage broadcast charging apparatus capable of receiving storage broadcast services without a user bearing a large expense, can be provided.

## Claims

1. A program receiving apparatus, comprising:
a receiving section for receiving programs and program attributes indicating attributes of the programs;
a program memory section for holding memory regions corresponding to the program attributes and memorizing the programs in the memory regions; and
a storage control section for storing the programs received by the receiving section in the memory regions of the program memory section corresponding to the program attribute received by the receiving section.

2. A program receiving apparatus according to claim 1, further comprising:
a memory region detecting section for detecting that the memory regions corresponding to the program attributes are allocated; and
an allocation information transmitting section for, when the memory region detecting section detects that amemory region corresponding to a specific program attribute is allocated, transmitting allocation information indicating the allocation.

3. A program receiving apparatus according to claim 1, further comprising:
a capacity managing section for managing capacities of the memory regions corresponding to the program attributes;
a capacity obtaining section for obtaining the capacities managed by the capacity managing section; and
a capacity information transmitting section for transmitting capacity information having a set of the program attributes and the capacities.

4. A program receiving apparatus according to any of claims 1 to 3, further comprising:
a memory region setting section for setting the memory region of each of the program attributes in the program memory section.

5. A storage broadcast charging apparatus, comprising:
a transmitting end information receiving section for receiving transmitting end information having capacity information and a transmitting end identifier for identifying a transmitting end for the capacity information; and
a refund calculating section for calculating a fund which should be paid back to the transmitting end identified with the transmitting end identifier contained in the transmitting end information using the capacity information contained in the transmitting end information as a parameter.
